Europäisches Patentamt

European Patent Office

Office européen des brevets

(11) Numéro de publication: **0 015 956**
**B1**

## (12) FASCICULE DE BREVET EUROPEEN

(45) Date de publication du fascicule du brevet: **28.07.82**

(21) Numéro de dépôt: **79900426.2**

(22) Date de dépôt: **30.03.79**

(86) Numéro de dépôt international:
**PCT/EP79/00025**

(87) Numéro de publication internationale:
**WO 79/00930 15.11.79 Gazette 79/23**

(51) Int. Cl.³: **H 02 K 7/12, H 02 K 37/00,
F 16 H 1/06 //G04C13/10,
G04B13/02**

(54) Dispositif d'entraînement d'une roue dentée par un moteur pas-à-pas.

(30) Priorité: **14.04.78 FR 7812233**

(43) Date de publication de la demande:
**01.10.80 Bulletin 80/20**

(45) Mention de la délivrance du brevet:
**28.07.82 Bulletin 82/30**

(84) Etats contractants désignés:
**CH DE GB**

(56) Documents cités:
**DE - U - 6 803 114
FR - A - 897 460
FR - A - 2 269 744**

(73) Titulaire: **LES FILS DE F. ROMANET S.A.R.L.
Hameau de la Combe Froide Morbier
F-39400 Morez (FR)**

(72) Inventeur: **ROMANET, Jean-François André Jules
No. 2 La Madone Morbier
F-39400 Morez (FR)**

(74) Mandataire: **Silhol, Christian Maurice Alfred
c/o BUGNION S.A. Conseils en Propriété
Industrielle 10, route de Florissant Case Postale
375
CH-1211 Genève 12 - Champel (CH)**

Courier Press, Leamington Spa, England.

Dispositif d'entraînement d'une roue dentée par un moteur pas à pas

L'invention concerne l'horlogerie de gros volume, particulièrement un dispositif d'entraînement d'une roue dentée par un moteur pas à pas dont le stator est constitué par une armature décalée par rapport au plan de symétrie transversal d'un rotor formé par un aimant porté par un arbre, ledit arbre disposant d'un certain jeu axial par rapport aux deux paliers entre lesquels il tourne.

Autrefois, lorsque la taille des roues dentées de petit diamètre était d'exécution difficile, les horlogers du moment utilisaient des pignons dits "à lanterne". Ces pignons étaient constitués de deux disques parallèles et concentriques reliés par un certain nombre de goupilles d'égale répartition radiale correspondant à la démultiplication recherchée.

L'entraînement des engrenages d'une pendule par de tels pignon présentait au moins deux inconvénients: l'encombrement et la réalisation délicate.

Actuellement les nouvelles techniques de moulage permettent de réaliser facilement de telles pièces.

La mise au point des moteurs pas à pas — dont la définition angulaire du pas dépend du nombre de pôles du rotor — a conduit certains horlogers à reprendre un tel entraînement, simple, mais dispendieux en énergie électrique et bruyant.

Le brevet FR—A—2 269 744 décrit un dispositif d'entraînement d'une roue dentée par un moteur pas à pas dont le stator est constitué par une armature décalée par rapport au plan de symétrie transversal d'un rotor formé par un aimant porté par un arbre.

L'invention a pour but de réaliser un dispositif d'entraînement autorisant un rapport d'un trentième, sans pignons intermédiaires, sans jeu, silencieux et économe en énergie électrique.

A cette fin, le dispositif selon l'invention est caractérisé par le fait que l'extrémité dudit arbre se trouvant du côté de la roue à entraîner comporte au moins un plateau concentrique et perpendiculaire à l'arbre, muni de deux goupilles diamétralement opposées l'une de l'autre par rapport à l'axe de l'arbre, perpendiculaires audit plateau et dont l'embase sur le plateau est conique et par le fait que chaque impulsion électrique déterminant un pas du moteur engendre une force qui déplace le plateau vers les dents de la roue à entraîner et introduit l'embase conique des goupilles entre ces dents de façon que soit supprimé, à chaque pas, le jeu existant entre la surface de contact de chaque goupille et celle des dents qu'elle déplace.

Le principal avantage apporté par un tel dispositif réside dans la faible valeur du couple de démarrage à chaque pas du moteur, ce qui a pour effet de ramener la consommation d'énergie électrique à un taux raisonnable, compatible avec une longue durée de piles de fabrication courante.

D'autres avantages ressortiront de la description d'une forme de réalisation, préférentielle mais non limitative, et du dessin dans lequel:

la figure 1 est une vue schématique,

la figure 2 est une vue de la position d'arrêt,

la figure 3 est une vue de la position d'entraînement.

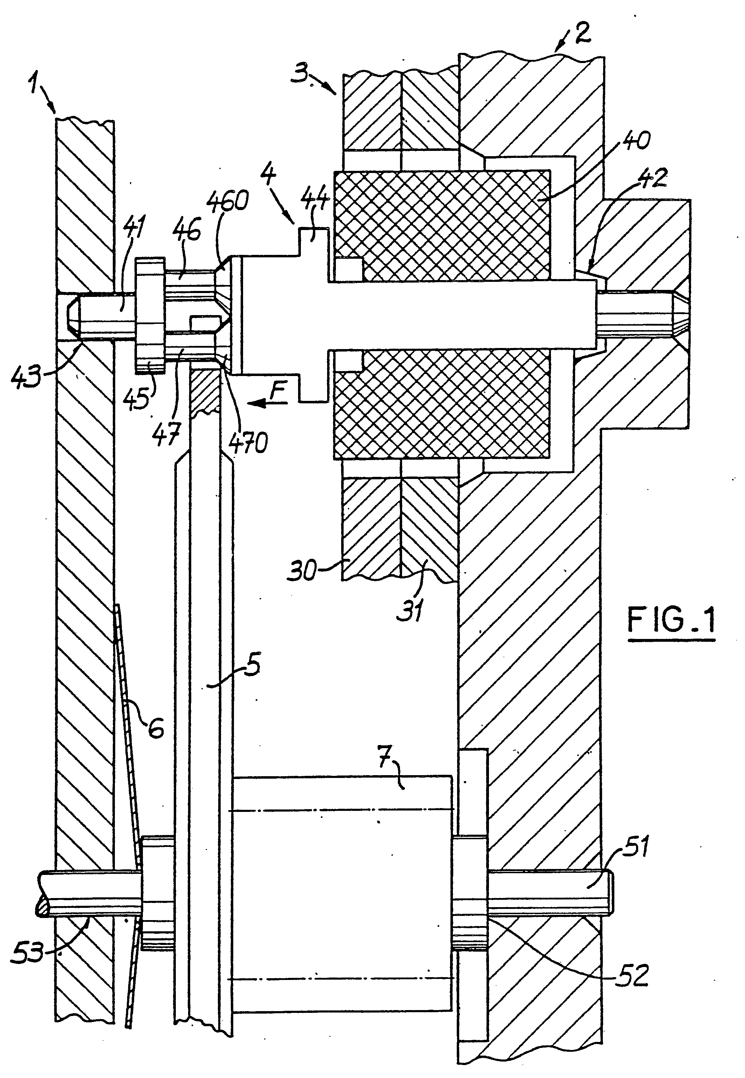

La figure 1 est une vue schématique du dispositif d'entraînement d'une roue dentée. Entre deux platines avant 1 et arrière 2, sont disposés un stator 3 constitué par deux plaques 30, 31 dont on sait que la dissymétrie détermine le sens de rotation du moteur et un rotor 4 constitué par un aimant bipolaire 40 monté sur un arbre 41 tournant entre deux paliers 42, 43 et disposant d'un certain jeu axial entre lesdits paliers.

Les armatures 30, 31 sont décalées par rapport à l'axe de symétrie transversal du rotor 4 de façon à créer une force F entraînant le rotor vers la platine avant 1, les forces magnétiques de l'aimant sollicitant celui-ci à se placer dans l'axe des armatures. La roue dentée à entraîner, ici la roue des secondes 5, est portée par un arbre 51 tournant entre deux paliers 52, 53 portés par les platines 1,2. Un ressort 6 limite le jeu axial de ladite roue 5 qui tourne librement sur ses paliers. L'arbre 51 porte également le pignon 7 engrenant les minutes.

Une manivelle d'entraînement de la roue 5 par le moteur pas à pas est constituée par deux plateaux 44, 45, concentriques et perpendiculaires à l'arbre 41, porteurs entre eux de deux goupilles 46, 47 diamétralement opposées et perpendiculaires auxdits plateaux.

L'embase 460, 470 des goupilles 46, 47 est conique.

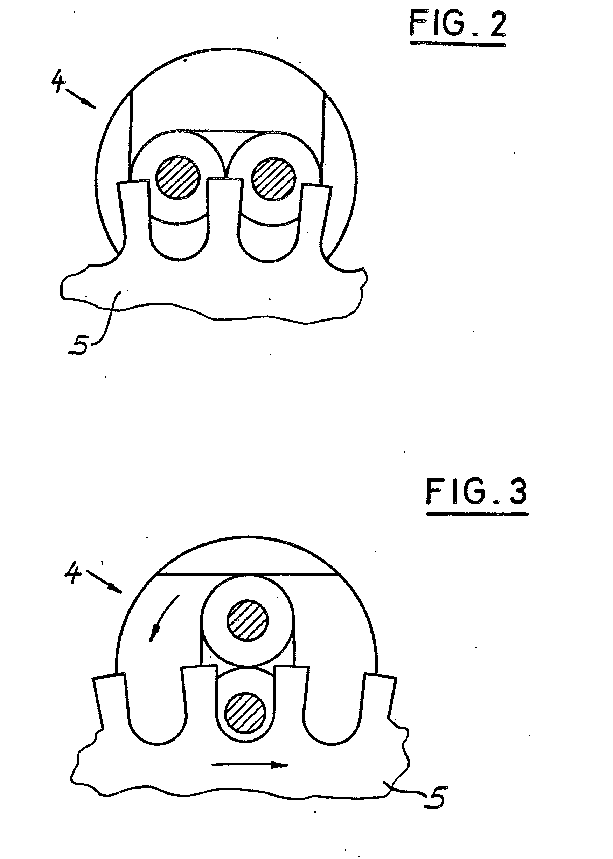

Les positions respectives de la manivelle d'entraînement ainsi constituée et de la roue dentée 5 sont calculées de façon qu'à chaque pas du moteur, lorsque cesse l'impulsion électrique et qu'est déterminée une rotation de 180° des plateaux 44, 45 les axes géométriques des goupilles 46, 47 se trouvent à la fois entre deux dents de la roue 5 et sur le cercle périphérique de ladite roue, position représentée par la figure 2.

Au moment où une impulsion électrique entraînera une autre rotation de 180° de la manivelle, le démarrage du moteur se fera facilement puisque la variation de l'intensité du couple résistant est sinusoïdale; ladite intensité passant par un minimum représenté par la figure 2 puis par un maximum représenté par la figure 3 avant de revenir au minimum (fig. 2).

De plus, la conicité des embases 460, 470 maintient un contact permanent entre les goupilles et les dents, contact renforcé par la force F qui attire la manivelle vers la platine avant 1, supprimant ainsi les vibrations, les chocs et le bruit inhérents aux entraînements connus.

Afin d'améliorer le contact entre les goupilles et les dents, ces dernières sont chanfreinées.

L'orientation du chanfrein des dents correspond au sens de rotation de la roue de façon que la surface de contact soit réduite à un minimum dans la phase d'entraînement de la roue.

Un autre avantage provient de l'irréversibilité de l'entraînement selon l'invention, dûe, pour la plus grande part, au pas de 180° et au contact permanent de la manivelle avec des dents.

Même si les dimensions du mobile indiquant les secondes lui confèrent une certaine inertie, aucun retour en arrière ou avance imprévue n'est possible.

## Revendications

1. Dispositif d'entraînement d'une roue dentée par un moteur pas à pas dont le stator est constitué par une armature (30, 31) décalée par rapport au plan de symétrie transversal d'un rotor (4) formé par un aimant (40) porté par un arbre (41), ledit arbre disposant d'un certain jeu axial par rapport aux deux paliers (42, 43) entre lesquels il tourne, caractérisé par le fait que l'extrémité dudit arbre se trouvant du côté de la roue à entraîner comporte au moins un plateau (44) concentrique et perpendiculaire à l'arbre, muni de deux goupilles (46, 47) diamétralement opposées l'une de l'autre par rapport à l'axe de l'arbre (41), perpendiculaires audit plateau et dont l'embase (460, 470) sur le plateau est conique, et par le fait que chaque impulsion électrique déterminant un pas du moteur engendre une force qui déplace le plateau vers les dents de la roue à entraîner et introduit l'embase conique des goupilles entre ces dents de façon que soit supprimé, à chaque pas, le jeu existant entre la surface de contact de chaque goupille motrice et celle des dents qu'elle déplace.

2. Dispositif d'entraînement selon la revendication 1, caractérisé par le fait qu'un second plateau (45) parallèle au premier, coiffe les deux goupilles et porte un prolongement de l'arbre moteur.

3. Dispositif d'entraînement selon la revendication 1, caractérisé par le fait que les dents de la roue sont chanfreinées, l'orientation du chanfrein correspondant au sens de rotation de la roue.

## Claims

1. Device for driving a toothed wheel from a step by step motor whose stator consists of an armature (30, 31) shifted in relation to the transverse plane of symmetry of a rotor (4) consisting of a magnet (40) carried by a shaft (41), said shaft having a certain axial play in relation to the two bearings (42, 43) between which it is adapted to rotate, characterized by the fact that the end of said shaft which is on the side of the wheel to be driven comprises at least one flange (44) concentric and perpendicular to said shaft, provided with a pair of pins (46, 47) diametrically opposed to each other in relation to said shaft (41), said pins extending at right angles to said flange and having a conical base (460, 470) on said flange, and that each electric pulse determining the motor step generates a force moving said flange towards the teeth of the wheel to be driven and introduces said conical base into the gap formed between adjacent teeth, thus eliminating at each step any play existing between the contact surface of each power pin and the surface of the teeth moved thereby.

2. Driving device according to claim 1, characterized by the fact that a second flange (45) parallel to said one flange (44) caps said pair of pins and carries an extension of said motor shaft.

3. Driving device according to claim 1, characterized by the fact that the wheel teeth are bevelled, the bevel orientation corresponding to the direction of rotation of the wheel.

## Patentansprüche

1. Vorrichtung zum Antrieb eines Zahnrades durch einen Schrittmotor mit einem Stator aus Blechen (30, 31), die versetzt gegenüber der Quersymmetrieebene des aus einem Magneten (40) auf einer Drehwelle (41) bestehenden Rotors (4) angeordnet sind, wobei die Rotordrehwelle ein gewisses axiales Spiel in ihren beiden Lagern (42, 43) aufweist, dadurch gekennzeichnet, dass das Wellenende auf der Seite des anzutreibenden Zahnrades (5) wenigstens eine konzentrisch und rechtwinklig auf der Welle sitzende Scheibe (44) mit zwei beiderseits der Wellenachse einander gegenüberliegenden Stiften (46, 47) trägt, die rechtwinklig zu der Scheibe ausgerichtet und deren Basen (460, 470) an der Scheibe konisch ausgebildet sind, und dass jeder Stromimpuls für einen Motorschritt die Scheibe gegen das anzutreibende Zahnrad und die konischen Basen der Stifte zwischen dessen Zähne drückt, so dass bei jedem Motorschritt das Spiel zwischen der Kontaktfläche jedes Antriebsstiftes und derjenigen des jeweils weiter zu rückenden Zahnes aufgehoben wird.

2. Vorrichtung nach Anspruch 1, dadurch gekennzeichnet, dass eine zweite Scheibe (45) parallel zur ersten angeordnet ist, welche die freien Enden der beiden Stifte (46, 47) aufnimmt und eine Verlängerung der Motorwelle trägt.

3. Vorrichtung nach Anspruch 1, dadurch gekennzeichnet, dass die Zähne des Zahnrades abgeschrägt sind, wobei die Richtung der Abschrägung der Drehrichtung des Zahnrades entspricht.

FIG.1

FIG. 2

FIG.3